# EUROPEAN PATENT APPLICATION

(11) **EP 2 043 279 A1**
(43) Date of publication of application: **01.04.2009**
(21) Application number: 07116497.4
(22) Date of filing: 14.09.2007
(51) Int. Cl.: H04B 3/54

(54) **A method and a system for providing data communication on-board trains in a plurality of carriages**

(71) Applicant: Icomera AB, 41104 Göteborg (SE)
(72) Inventor: Bergek, Martin, 412 62 Göteborg (SE); Karlsson, Mats, 431 67 Mölndal (SE)
(74) Representative: Lind, Urban Arvid Oskar

(57) **Abstract**

A system for providing data communication on-board trains in a plurality of carriages within a train set is disclosed. The system comprises a backbone network connecting carriage access units within each of the carriages, and the backbone network comprises a cable running through pre-existing inter-carriage connections, whereby the cable runs between the carriages within the train set. Further, each carriage access unit comprises a data communication interface accessible to communication devices within the carriage and a data communication interface for connection to said backbone network cable. At least one of the carriage access units is connected to a power source via a first filter, said first filter preventing high frequency signals from passing to and from said carriage access unit to said power source.

## Description

### Field of invention

The present invention relates to a system for trains, comprising a unit mounted on the train to provide data communication services over existing inter-carriage couplings without disturbing existing applications on said couplings.

### Background of the invention

When working with various applications for on-train use it is very advantageous to have a train backbone Ethernet network running along the entire train set. However, such networks typically do not exist in trains. Future trains may include standard CAT5/6 wired Ethernet but since the usable lifetime of most trains often is more than 20 years, it will be a long time until such wired networks will be generally available.

Installing network cables within a single carriage is a straightforward task. However, it is not so easy to connect the carriages making up a train set to one another. There are pre-existing inter-carriage couplings between carriages but they are virtually always filled with legacy cables and there is no room to add a dedicated network cable or it would be prohibitively expensive to do so. Even if there are spare poles within the inter-carriage coupling the connectors would likely not be suitable for Ethernet signaling.

Within the train set there are a number of cables, some of which run the entire length of the train. These are normally used for various purposes, some with low voltage signals and some with high voltage (e.g. for heating or other purposes). However, use of those cables for networking purposes are limited by that they typically include filtering circuits or have their power intermittently broken. All signal cables running throughout the train are also normally used for various legacy purposes - some of which are vital for the operation of the train. These applications must not be disturbed.

There exist solutions for providing Internet services for onboard train use. In those cases the interconnections between the carriages have so far been solved by using wireless bridges, using IEEE 802.11. While this solution does work it has some shortcomings, most noticeably low throughput, significant packet loss, high latency as well as reconfiguration issues when rearranging the carriages making up the train set. It also makes the system more vulnerable from a security perspective since the data stream can potentially be intercepted in multiple locations.

Using wireless bridges to connect the carriages also creates a background noise for the client access points, thereby reducing the performance of the onboard network for the users.

Since the current applications for onboard use are typically focused on providing Internet access for onboard users, the above limitations (i.e. primarily the throughput limitations and packet losses) are not a major issue since the bottleneck will typically be the connection from the train to ground rather than the onboard network. However, using wireless bridges to connect the carriages makes it utterly useless for high-bandwidth onboard services such as video streaming, CCTV or onboard VoIP services.

There is therefore a need for an improved method for interconnecting carriages making up a train set to provide a stable and high performing backbone network with no impact on existing onboard applications. The invention provides a solution for data communication on a train set that is both cost effective and simple to roll out on existing trains while providing dramatically higher performance.

### Objective of the invention

It is therefore an objective of the present invention to alleviate the above-discussed drawbacks of the prior art. Specifically, it is an object of the present invention to provide an improved method for interconnecting carriages making up a train set to provide a stable and high performing backbone network with no impact on existing onboard applications. Further, it is also an object of the present invention to provide a solution for data communication on a train set that is both cost effective and simple to roll out on existing trains while providing dramatically higher performance.

The objective is achieved by a method and a system according to the appended claims.

### Summary of the invention

According to a first aspect of the invention, there is provided a system for providing data communication on-board trains in a plurality of carriages within a train set, comprising:
a backbone network connecting carriage access units within each of said plurality of carriages, said backbone network comprising a cable running through pre-existing inter-carriage connections, whereby said cable runs between said carriages within said train set;
wherein each carriage access unit comprises a data communication interface accessible to communication devices within said carriage and a data communication interface for connection to said backbone network cable; and
wherein at least one of said carriage access units is connected to a power source via a first filter, said first filter preventing high frequency signals from passing to and from said carriage access unit to said power source.

Hereby, it becomes possible to use an pre-existing cables and/or pre-existing inter-carriage connections in the train set, and which connects the carriages, for the use as a backbone network cable. This cable could either be a cable which is not previously used, and which may then be dedicated to the use as a backbone cable, or an already used cable, which is then shared with other applications on board the train. It is also possible to use pre-existing inter-carriage connections that are not connected through the carriage, in which case a new cable may be arranged through the carriage between the inter-carriage connections. Notably, provision of a new cable within a carriage is significantly easier and less costly than provision of new inter-carriage connection. Specifically, the first filter prevents high frequency signals from passing to and from said carriage access unit to said power source, and consequently protection is ensured against e.g. compromise of legacy applications. Further, the first filter also eliminates the effect of any pre-existing filters connected to the cable, which may otherwise have caused problems e.g. in respect of attenuating or canceling the generated HF-signals. Thus, the fact that the power source is connected to the cable to be used for data transfer is made through the carriage access unit, and the first filter within this, ensures that a high security level is ensured both for at the power source end and at the cable end.

The first filter preferably comprises at least one inductor along each wired connection, and at least one capacitor arranged bridged between said wired connections, said bridged capacitor arranged between the inductors and the power source. Even though this is a preferred type of low-pass filter for use in the present invention, it should be appreciated that many other types of known low-pass filters can also be used.

The pre-existing cable may be dedicated for use for said backbone network. In this case, at least one, and preferably all but one, of the carriage access units may not be connected to a power source, wherein power to said carriage access unit(s) not connected to a power source is provided through another of said carriage access units through said backbone network. However, alternatively, all carriage access units may be independently connected to a power source.

Alternatively, the pre-existing cable is a shared cable, used for at least one other train application. In this case, the carriage access units are preferably connected to said backbone network cable through a second filter, said second filter preventing DC or low-frequency AC power to pass to and from said carriage access units to said backbone network cable. In this case, it is also preferred that each of said carriage access units are connected to a power source via said first filter.

The second filter is a high-pass filter, and preferably comprises at least one capacitor along each wired connection. However, even though this is a preferred type of high-pass filter for use in the present invention, it should be appreciated that many other types of known high-pass filters can also be used.

In a preferred embodiment, the system in accordance with the present invention makes use of both the first filter, i.e. the low-pass filter in the connection to the power source, and the second filter, i.e. the high-pass filter in the connection to the cable to be used for data transfer. However, it is noted that for many applications of the present invention, is is sufficient to provide only the first filter, in order to ensure that all the requirements in terms of safety etc. are met. Further, it is noted that for some applications it may be sufficient to use only the second filter, without the first filter, in order to meet all the requirements in terms of safety etc.

According to another aspect of the present invention, there is provided a method for providing data communication on-board trains in a plurality of carriages within a train set, comprising:
providing a carriage access unit within each of said plurality of carriages, each carriage access unit comprising a data communication interface accessible to communication devices within said carriage;
providing a backbone network by connecting said carriage access units within each of said plurality of carriages to a cable running through pre-existing inter-carriage connections, whereby the cable runs between said carriages within said train set; and
connecting at least one of said carriage access units to a power source via a first filter, said first filter preventing high frequency signals from passing to and from said carriage access unit to said power source.

This method corresponds to the above-discussed system, and the discussion above of advantages and preferred features in relation to the system is therefore equally applicable for this second aspect of the invention.

The invention described above is especially useful for inter-connecting carriages making up a train set for high throughput onboard data services. The invention is suitable for any type of Ethernet to power line adaptors, or similar types of data communication adaptors.

These and other aspects of the invention will be apparent from and elucidated with reference to the embodiments described hereinafter.

### Brief description of the drawings

For exemplifying purposes, the invention will be described to embodiments thereof illustrated in the attached drawings, wherein:
Figure 1 is a schematic view of a carriage access unit in accordance with one embodiment of the present invention, and in this case in the form of an Ethernet / powerline adapter. Power is applied to J4 which is also the connector used by the adaptor for both HF input and output. J5 connects to a standard wired 802.11, or similar, network.
Figure 2 is a schematic view of a filter component to be used in a carriage access unit in accordance with an embodiment of the present invention, showing the three different locations where source power is taken and where the signal is fed out. J1 is for power only. J2 is used to connect the Ethernet / powerline adaptor (through J4). J3 is used to output the high-frequency HF signal. The capacitor circuits between J2 and J3 ensure that no DC or low-frequency AC power is fed out on J3.
Figure 3 is a schematic view of an alternative realization of a subcomponent of the filter card illustrated in Figure 2. While it would work with a simple capacitor, using a more elaborate design allows for the filter card to better filter out unwanted signals, as well as maintaining the function even if a capacitor is broken or shorted. It also increases the longevity of the circuit.
Figure 4 is a schematic view of a carriage access unit in accordance with an embodiment of the present invention, to be used in a system according to a first or second embodiment of the invention.
Figure 5 is a schematic view of a carriage access unit in accordance with another embodiment of the present invention, to be used in a system according to a third embodiment of the invention.
Figure 6 is a schematic view of a system according to the second embodiment of the present invention, illustrating a train installation over three carriages, one being provided with the carriage access unit of Figure 4 and the other two with the carriage access unit of Figure 1.
Figure 7 is a schematic view of a system according to a third embodiment of the present invention, illustrating a train installation over three carriages, all being provided with the carriage access units of Figure 5.

### Description of preferred embodiments

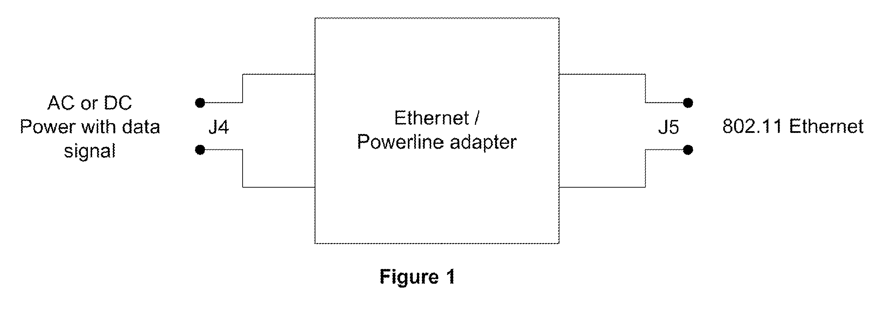

With reference to figures 1-7, the embodiments of the invention will now be discussed in more detail. Figures 1-7 schematically illustrate different variants of a system for how to mount equipment.

The invention relates to a system for providing data communication on-board trains in a plurality of carriages within a train set, where a carriage access unit is provided in each of a plurality of carriages within a train set. Each carriage access unit comprises a data communication interface accessible to communication devices within said carriage, such as passenger laptop computers. The carriage access unit can also be connected to local sub-networks within each carriage. Further, the carriage access unit system is preferably connected to an external data communication interface for connection to an external network, such as the Internet. The connection to the external network is provided through a wireless network interface, using WiFi, GPRS, UMTS or the like. The carriage access units are connected to the external data communication interface through a backbone network, as discussed more thoroughly in the following.

Carriage access units enabling data communication on-board trains for passengers are per se previously known, and are e.g. commercially available by the present Applicant. Such general systems are further discussed in e.g. EP 1 416 583 and EP 1 175 757 by the same Applicant, both said documents hereby incorporated by reference. In order not to obscure the description of the present invention, the general operation of these carriage access units will not be discussed to any greater extent in this application.

In the following, the below-discussed names are given to the different general types of circuits used:
(1) The power source (hereinafter referred to as PS) is a DC or low frequency AC circuit that is used purely to provide electrical power to the units described below.
(2) A dedicated power and high-frequency circuit (hereinafter referred to as PSHF) carries power to units as described in this document as well as providing a HF conduit for transformed Ethernet data and is not shared with other applications.
(3) A shared high-frequency circuit (hereinafter referred to as HF) carries only the high-frequency transformed Ethernet signal on a circuit that is shared with DC or low-frequency AC components belonging to other applications.

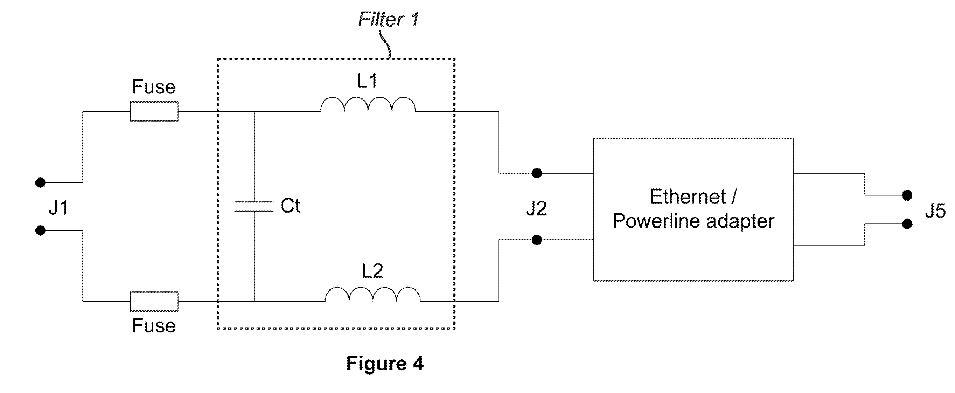

According to a first embodiment of the invention, a system for trains is provided, comprising a carriage access unit installed in each carriage. Figure 4 illustrates how to solve the problem when there is a unused cable running the whole length of the train. Referring to figure 4, the unit has three connections; one to connect to an on-carriage wired Ethernet network or a single Ethernet device (J5), one to connect to a power source (PS) with a first filter to ensure that high frequency signals are not fed back to the source network which could compromise legacy applications (J1) and one to connect to a dedicated cable (PSHF) running along the entire train set (J2). Thus, power is applied to the connector J1 and can be supplied in a single point or in each carriage. J2 is connected to a dedicated cable that runs the entire length of the train. J5 provides a standard 802.11 Ethernet interface.

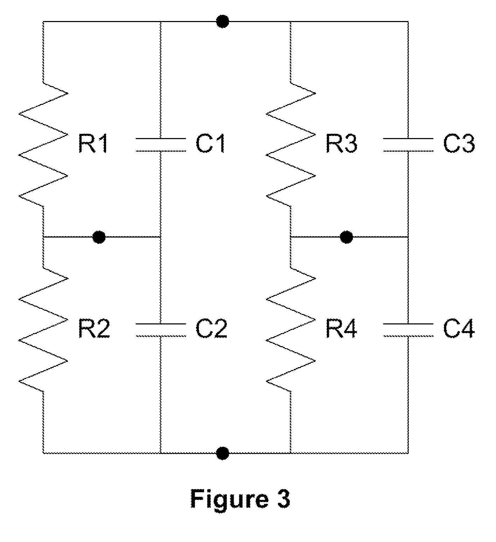

The first filter comprises two inductors (L1 & L2), to ensure that HF signals are not fed back to the source network (PS), and a capacitor which take care of any stray noise from the HF side. Note that for simplicity only a single capacitor is shown in the figure. In a real implementation, that part of the circuit may be provided by a circuit such as that depicted in figure 3 where multiple capacitors and resistors enable the circuit to function even if one or more of the included capacitors are shorted or broken. The resistors are high ohmic and help to increase the longevity of the circuit.

The unit converts the Ethernet signals into an HF signal that is overlaid the output signal (J2) from the unit. The same conversion is done in reverse, meaning that the received HF signal is converted into Ethernet traffic and output on the wired Ethernet side.

This embodiment of the invention provides a solution for the cases where there are existing unused connection poles in the inter-carriage coupling. There may or may not exist spare cables in each carriage; if there are no existing cables within each carriage, such cables can relatively easily be added. Regardless, the filter components in the unit ensure that existing applications are not affected.

According to a second embodiment of the invention, a set of units such as the ones described above can be used in a manner whereby power is only applied to a single unit with the remaining units being fed power via the dedicated signal cable (PSHF). This has the additional benefit of automatically turning off any backbone network equipment when the power is removed in the main carriage.

Referring to figure 4, one such unit would be installed in a single carriage. The rest of the carriages would just need a simplified unit such as the one depicted in figure 1 (i.e. the same type of unit but without the filtering components).

The previous two aspects relate to situations where there is a dedicated cable available for data signals and also potentially power to the units making up the backbone network. In the normal case low voltage, uninterrupted power is available in each carriage but is heavily filtered by legacy filters, meaning that it is difficult to use such circuits for data transfer. On the other hand there may be other circuits without any filters that may therefore be suitable for carrying data signal; but that power on the circuit is intermittently broken. This is for instance the case with high voltage cables running through a train set, carrying power for heating equipment.

In this case it is necessary to use one circuit for power, ensuring that no created data signal is leaked out on it, while using another circuit for data signals, eliminating the effect of any DC voltage on that circuit.

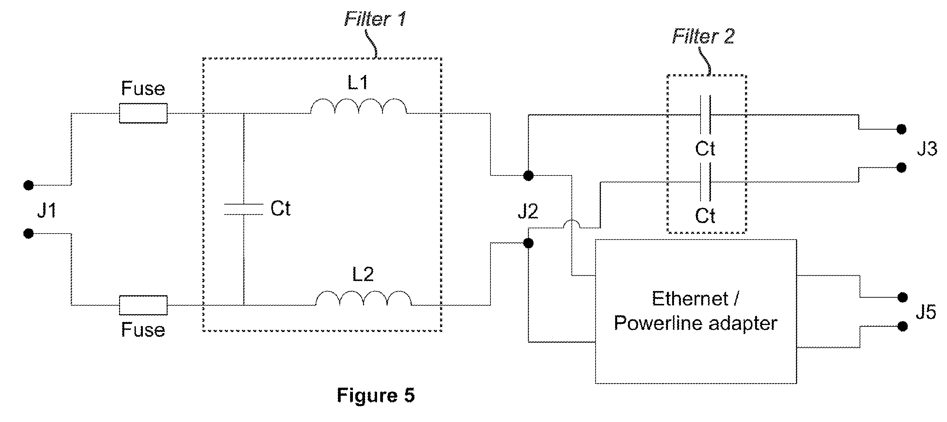

Thus, according to a third embodiment of the invention and referring to figure 5 the unit described above is adapted so that power is taken from a power source (PS) with filters applied internally to avoid any HF signals from being fed back to the source network. The unit is further adapted so that it can be connected to an on-train cable (HF) in a way that only high-frequency AC signals are fed out on that circuit.

Figure 5 illustrates how to solve the problem when there is no dedicated cable in the train that can be used to carry the HF signal or the power to the units making up the network. As is the case in figure 4, power is supplied through J1 (PS). However, instead of connecting J2 to a dedicated cable, the HF part is filtered out to J3 (HF) which can be connected to any cable that runs the entire length of the train. As before, J5 provides a standard 802.11 Ethernet interface. Since there is no DC or low-frequency AC being output on the cable used for the HF signal (HF), power must be supplied through a filter card in each carriage.

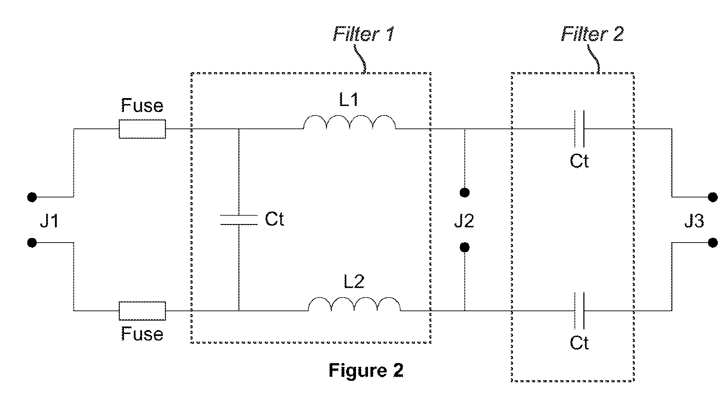

For this embodiment of the invention, a high-pass filter is added to the filter circuitry on the outgoing path (HF). Referring to figure 2, the Ethernet /powerline adapter unit would be connected to J2 and the cable on which the HF signal should be overlaid should be connected to J3. Again, the capacitors in the figure are simplified and would typically include circuitry similar to that depicted in figure 3.

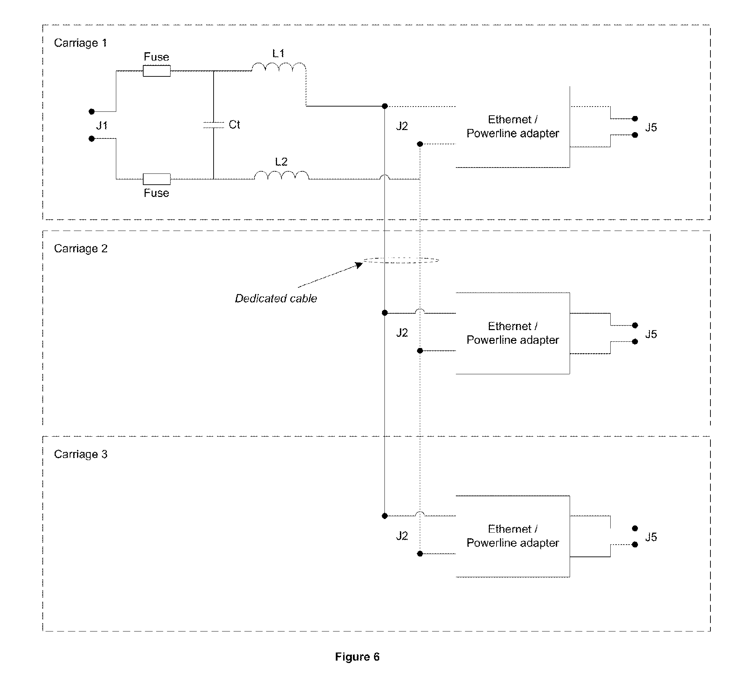

Figure 6 illustrates how an implementation would schematically look for a train set with three carriages according to the second embodiment of the invention. Power is supplied through J1 in one of the carriages and a dedicated cable (PSHF) is used to carry both data and power to the other units. Each unit would also provide an Ethernet interface (J5).

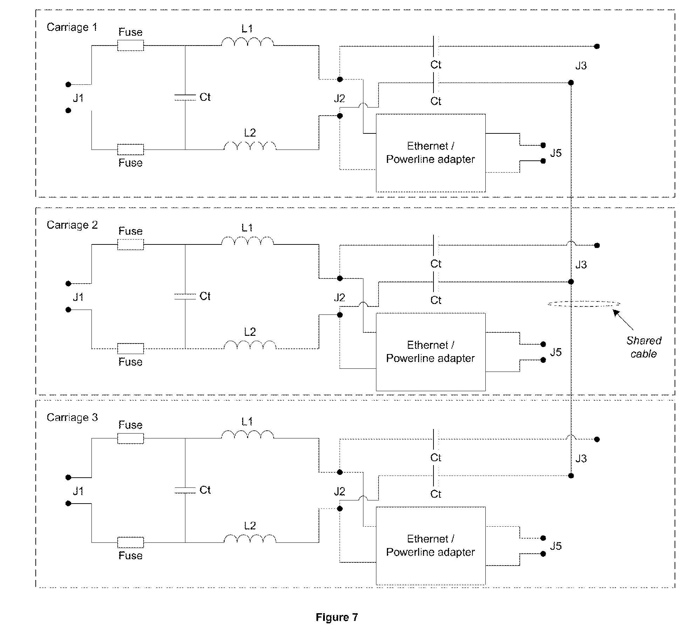

Figure 7 illustrates how an implementation would schematically look for a train set with three carriages according to the third embodiment of the invention. Power is supplied through J1 in each carriage and each unit is connected to a shared cable (HF) through the connector J3. Each unit also provides an Ethernet interface (J5).

During experimental tests, the present invention has proven very successful. In prior art solutions, such as the one using wireless bridges to connect the carriage access units of the carriages, the bandwidth is typically reduced by at least 50% in each bridge connection, which may lead to a bandwidth of less than 1 Mbps in some carriages, latency is increased with each bridge connection, which may lead to latencies as high as 50 ms, and a quite significant number of packets are lost - typically a few percent of the packets are lost, and sometimes as many as 5% or more. With a test setup of the present invention, used in the same train environment as discussed above for the wireless bridge system, a very high bandwidth (here 100 Mbps) could be maintained over communication between all the carriages, the latency is at a maximum around 5 ms, and not a single packet error was identifiable during a prolonged test period.

Specific embodiments of the invention have now been described. However, several alternatives are possible, as would be apparent for someone skilled in the art. For example, the unit could be combined with a wireless access point (e.g. IEEE 802.11). Then, if a dedicated cable is used throughout the train and power is only supplied to the units from a single point in the train set, this would ensure that all access points are turned off from the main unit. Further, the carriage access units arranged in each carriage could be based on other protocols than Ethernet, various protocols can be used for the backbone network, etc.

It should be noted that the abovementioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A system for providing data communication on-board trains in a plurality of carriages within a train set, comprising:
a backbone network connecting carriage access units within each of said plurality of carriages, said backbone network comprising a cable running through pre-existing inter-carriage connections, whereby the cable runs between said carriages within said train set;
wherein each carriage access unit comprises a data communication interface accessible to communication devices within said carriage and a data communication interface for connection to said backbone network cable; and
wherein at least one of said carriage access units is connected to a power source via a first filter, said first filter preventing high frequency signals from passing to and from said carriage access unit to said power source.

2. The system of claim 1, wherein said first filter comprises at least one inductor along each wired connection, and at least one capacitor arranged bridged between said wired connections, the bridged capacitor arranged between the inductors and the power source.

3. The system of claim 1 or 2, wherein said cable is dedicated for use for said backbone network.

4. The system of claim 3, wherein at least one of the carriage access units is not connected to a power source, wherein power to said carriage access unit not connected to a power source is provided through another of said carriage access units through said backbone network.

5. The system of claim 1 or 2, wherein said cable is a shared cable, used for at least one other train application.

6. The system of claim 5, wherein the carriage access units are connected to said backbone network cable through a second filter, said second filter preventing DC or low-frequency AC power to pass to and from said carriage access units to said backbone network cable.

7. The system of any one of the claims 1-3, 5 and 6, wherein each of said carriage access units are connected to a power source via said first filter.

8. A method for providing data communication on-board trains in a plurality of carriages within a train set, comprising:
providing a carriage access unit within each of said plurality of carriages, each carriage access unit comprising a data communication interface accessible to communication devices within said carriage;
providing a backbone network by connecting said carriage access units within each of said plurality of carriages to a cable running through pre-existing inter-carriage connections, whereby the cable runs between said carriages within said train set; and
connecting at least one of said carriage access units to a power source via a first filter, said first filter preventing high frequency signals from passing to and from said carriage access unit to said power source.

9. The method of claim 8, wherein said cable is dedicated for use for said backbone network,

10. The method of claim 9, wherein at least one of the carriage access units is not connected to a power source, wherein power to said carriage access unit not connected to a power source is provided through from another of said carriage access units through said backbone network.

11. The method of claim 8, wherein said cable is a shared cable, used for at least one other train application.

12. The method of claim 11, wherein the carriage access units are connected to said backbone network cable through a second filter, said second filter preventing DC or low-frequency AC power to pass to and from said carriage access units to said backbone network cable.

13. The method of any one of the claims 8, 9, 11 and 12, wherein each of said carriage access units are connected to a power source via said first filter.
